Europäisches Patentamt

European Patent Office

Office européen des brevets

(19)

(11) Veröffentlichungsnummer: **0 201 614**
**B1**

(12)

# EUROPÄISCHE PATENTSCHRIFT

(45) Veröffentlichungstag der Patentschrift:
27.12.89

(51) Int. Cl.⁴: **B 01 D 53/18,** B 01 J 35/02

(21) Anmeldenummer: **85105936.0**

(22) Anmeldetag: **14.05.85**

(54) Reaktor zum Durchführen von heterogenen, katalysierten chemischen Reaktionen.

(43) Veröffentlichungstag der Anmeldung:
20.11.86 Patentblatt 86/47

(45) Bekanntmachung des Hinweises auf die Patenterteilung:
27.12.89 Patentblatt 89/52

(84) Benannte Vertragsstaaten:
BE CH DE FR GB IT LI NL SE

(56) Entgegenhaltungen:
EP-A-0 068 862
DE-A-2 942 359
FR-A-2 134 377

(73) Patentinhaber: GEBRÜDER SULZER
AKTIENGESELLSCHAFT, Zürcherstrasse 9, CH-8401 Winterthur (CH)

(72) Erfinder: Sperandio, August, Dr., Grundstrasse 15, CH- 8472 Seuzach (CH)

(74) Vertreter: Dipl.- Ing. H. Marsch Dipl.- Ing. K. Sparing Dipl.- Phys.Dr. W.H. Röhl Patentanwälte, Rethelstrasse 123 Postfach 14 02 68, D-4000 Düsseldorf (DE)

2

## Beschreibung

Die Erfindung betrifft einen Reaktor zum Durchführen von heterogenen, katalysierten chemischen Reaktionen, mit mindestens einem einen Katalysator aufweisenden Packungselement, das aus parallel zur Hauptströmungsachse des Reaktors angeordneten, gewellten Platten besteht, deren Wellung schräg zur Hauptströmungsachse geneigt und bei benachbarten Platten entgegengesetzt gerichtet ist.

Bei einem bekannten Reaktor dieser Art (CH-A-547 120) bestehen die Platten eines Packungselementes selbst aus einem Katalysatormaterial oder sie sind mit einem solchen Material beschichtet. Der Nachteil besteht darin, daß eine aus Katalysatormaterial bestehende Platte sehr teuer ist, da ihre Stärke an erster Stelle bestimmt wird durch die Festigkeitsanforderungen im Hinblick auf die Gas- und Flüssigkeitsströmungen. Das Beschichten einer Platte mit Katalysatormaterial ist ebenfalls, wenn auch weniger teuer. Außerdem muß der Katalyatorüberzug nach einiger Zeit regeneriert und hierzu das ganze Packungselement bearbeitet werden.

Außerdem ist aus der EP-A-0 068 862 ein Packungselement bekannt, welches abwechselnd aus katalytischen und nichtkatalytischen bandförmigen Elementen besteht, wobei die katalytischen Elemente gewellt und die nichtkatalytischen Elemente aus Textilmaterial bestehen und zu einem Wickel aufgewickelt sind. Hierbei kommt dem katalytischen Element die tragende Funktion zu, das außerdem mit der flüssigen Phase nicht in Berührung gelangen darf, um eine Zerstörung des Katalysators zu vermeiden.

Der Erfindung liegt die Aufgabe zugrunde, einen Reaktor der eingangs genannten Art zu schaffen, der wirtschaftlich herzustellen ist.

Diese Aufgabe wird dadurch gelöst, daß zwischen benachbarten Platten mindestens ein bandförmiger, mindestens teilweise gewellter Katalysatorkörper entfernbar eingefügt ist, wobei die Wellenlänge der Wellung des Katalysatorkörpers kleiner als die Wellenlänge der benachbarten gewellten Platten ist und die Oberfläche des Katalysatorkörpers größer als die Oberfläche einer benachbarten gewellten Platte ist.

Gemäß der Erfindung wird zwischen benachbarten Platten mindestens ein bandförmiger Katalysatorkörper angebracht. Nebst der Lösung der gestellten Aufgabe bietet der Reaktor noch den Vorteil der einheitlichen Fertigung der gewellten Platten für Reaktoren für nichtkatalysierte und katalysierte Reaktionen. Im letzteren Fall brauchen nur die Katalysatorkörper zusätzlich angebracht zu werden. Weiterhin sind bestehende Reaktoren für nichtkatalysierte Reaktionen in derselben Weise schnell und billig umzurüsten, falls sie für katalysierte Reaktionen eingesetzt werden müssen. Das Umgekehrte kann ebenfalls schnell erreicht werden durch Entfernung der Katalysatorkörper.

Ein Ausführungsbeispiel des Erfindungsgegenstandes ist nachfolgend anhand der Zeichnungen beschrieben.

Fig. 1 zeigt einen Teilquerschnitt in schematischer Darstellung eines Reaktors gemäß der Erfindung.

Fig. 2 zeigt ein Packungselement in explodierter Darstellung und im vergrößerten Maßstab, ohne Katalysatorkörper.

Fig. 3 zeigt einen Querschnitt längs der Linie III - III von Fig. 1.

Fig. 4 zeigt einen Teil eines Katalysatorkörpers in perspektivischer Darstellung.

Fig. 5 zeigt eine Draufsicht gemäß V - V von Fig. 4.

Fig. 6 zeigt eine Platte eines Packungselementes mit beidseitig angebrachten Katalysatorkörpern.

Fig. 7 und 8 zeigen abgewandelte Ausführungsformen von Katalysatorkörpern.

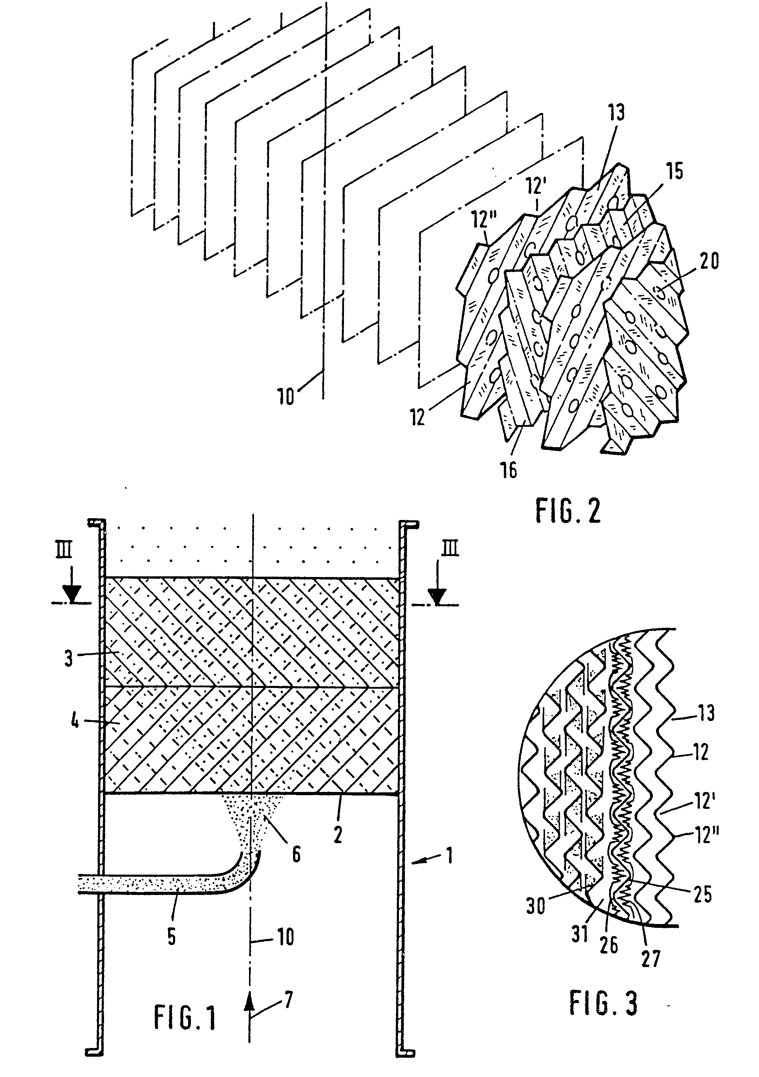

Fig. 1 zeigt einen Reaktor 1 in der Form eines zylindrischen Behälters mit einer Packung 2. Die Packung 2 besteht aus einer Anzahl Packungselementen, wovon nur zwei, die Packungselemente 3 und 4, gezeichnet sind. Durch ein Rohr 5 wird ein Fluid 6 in den Reaktor 3 eingeführt, z. B. ein Gas, das mit dem durch den Reaktor gemäß Pfeil 7 aufwärtsströmenden, anderen Fluid, z. B. einer Flüssigkeit, reagieren soll.

Jedes Packungselement besteht aus einer Aneinanderreihung von parallel zur Reaktorlängsachse 10 stehenden, gewellten Platten 12. Die Bezeichnung "gewellt" schließt hier andere Bezeichnungen wie geriffelt, gezahnt und andere ein. Jede Welle einer Platte weist Wellentäler 12' und Wellenkämme 12" auf. Die Länge der Platten nimmt zur Mitte des Packungsmoduls hin zu, derart, daß die Platten zusammen eine zylindrische Form aufweisen. Die Platten werden beispielsweise durch ein umschlingendes Band oder einen Stift zusammengehalten. Wie aus Fig. 2 ersichtlich, ist die Wellenrichtung der Platten zur Reaktorlängsachse geneigt und bei benachbarten Platten entgegengesetzt. So verlaufen die Wellen 13 der Platte 12 hinsichtlich der Reaktorlängsachse 10 schräg nach rechts oben, die Wellen 15 der benachbarten Patte 16 verlaufen schräg nach links unten. Zwecks eines gründlichen Austauschens der reagierenden Komponenten können die Platten mit Öffnungen 20 versehen sein.

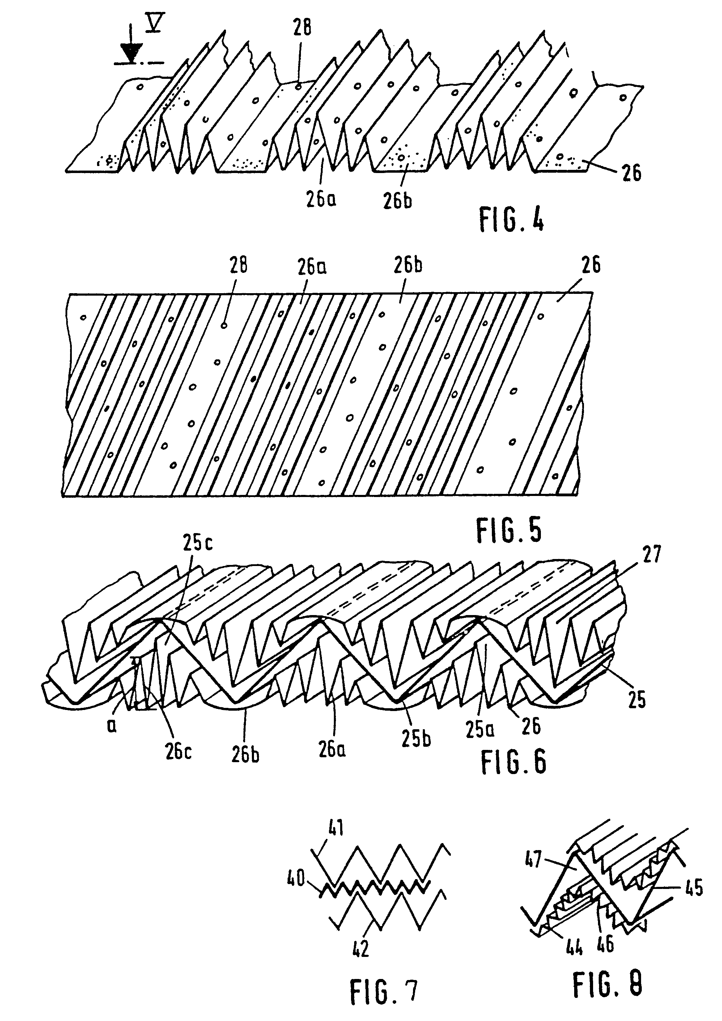

Auf beiden Seiten einer jeden gewellten Platte, z. B. der Platte 25, ist ein bandförmiger Katalysatorkörper 26 bzw. 27 angebracht. Die Breite des Bandes entspricht etwa der Höhe der Platte; es kann jedoch auch schmäler sein. Jeder Katalysatorkörper, z. B. Katalysatorkörper 26 (Fig. 4), weist, den Wellentälern 25a und Wellenkämmen 25b der Platte 25 folgend, abwechselnd geriffelte und nichtgeriffelte Abschnitte 26a bzw. 26b auf.

3

Die Richtung der Abschnitte entspricht somit der Wellenrichtung der Platte 25. Die geriffelten Abschnitte 26a (Fig. 6) befinden sich jeweils in einem Wellental 25a, die nichtgeriffelten Abschnitte 26b umrunden jeweils einen Wellenkamm 25b der Platte 25. Die Amplitude a der einzelnen Riffelungen 26c innerhalb eines geriffelten Abschnittes 26 nimmt zur Talsohle 25c des zugehörigen Wellentales 25b hin zu. Die benachbarte Platte 30, deren Wellung entgegengesetzt zu der der Platte 25 gerichtet ist, weist ebenfalls auf beiden Seiten einen (nichtgezeichneten) Katalysatorkörper mit konformer Wellung auf. Es befinden sich somit im Raum 31 zwischen jedem Plattenpaar zwei Katalysatorkörper entgegengesetzter Wellenrichtung. Die katalytisch wirksame Fläche des Packungselements ist somit sehr gross. Zwecks Begünstigung des Austauschens der reagierenden Komponenten kann der Katalysatorkörper 26 mit Öffnungen 28 versehen sein. Es ist weiterhin möglich, anstelle eines Katalysatorkörpers aus einem einzigen Band, mehrere, schmälere, streifenförmige Katalysatorkörper anzubringen, zwischen denen Abstände bestehen können.

Der Katalysatorkörper kann als Ganzer aus einem katalytisch wirksamen Material bestehen.

Es ist auch möglich, dass der Katalysatorkörper ein Körper ist, dessen Oberfläche katalytisch aktiviert ist.

Weiterhin kann der Katalysatorkörper ein mit einem katalytisch wirksamen Material beschichteter Körper sein.

In allen Fällen kann der katalytisch wirksame Teil des Katalysatorkörpers aus Glasmetall (Rapidly Solidified Products, RSP) bestehen, ein Material das bekanntlich eine starke katalytische Wirkung hat.

Schliesslich sei bemerkt, dass der Katalysatorkörper als Drahtgeflecht oder Drahtgewirk gebildet sein kann.

Obschon die Vorrichtung mit zwei Katalysatorkörpern beidseits einer gewellten Platte gezeigt und beschrieben worden ist, kann abhängig von den durchzuführenden chemischen Reaktionen, ein einziger Katalysatorkörper genügen.

Bei der Ausführungsform nach Fig. 7 besteht der Katalysatorkörper aus einem Band 40 mit einer Riffelung, deren Wellenlänge kleiner ist, als die der benachbarten gewellten Platen 41 und 42, und senkrecht zur Längsrichtung des Bandes verläuft.

Die Ausführungsform nach Fig. 8 zeigt in der Perspektive einen Katalysatorkörper in der Form eines geriffelten Bandes 44 mit einer Riffelung, deren Wellenlänge kleiner ist als die der zugehörigen gewellten Platte 45, und parallel zur Wellung der Platte verläuft. Die Abschnitte 46 des Bandes, die ein Wellental 47 der Platte 45 überqueren sind in das Wellental hineingefügt, so dass eine grössere Länge des Bandes untergebracht ist.

Bei allen gezeigten Ausführungsformen können zusätzlich die gewellten Platten katalytisch wirksam sein, indem sie z. B. mit einem Katalysatormaterial beschichtet sind.

4

Das Packungselement 4 ist in derselben Weise aufgebaut wie das Packungselement 3. Es ist hinsichtlich der Reaktorlängsachse gegenüber dem Packungselement 3 verdreht, z. B. um einen Winkel von 90°.

**Patentansprüche**

1. Reaktor (1) zum Durchführen von heterogenen, katalysierten chemischen Reaktionen, mit mindestens einem einen Katalysator aufweisenden Packungselement (3, 4), das aus parallel zur Hauptströmungsachse (10) des Reaktors (1) angeordneten, gewellten Platten (12, 25, 41, 42, 45) besteht, deren Wellung schräg zur Hauptströmungsachse (10) geneigt und bei benachbarten Platten (12, 25, 41, 42, 45) entgegengesetzt gerichtet ist, *dadurch gekennzeichnet, daß* zwischen benachbarten Platten (12, 25, 41, 42, 45) mindestens ein bandförmiger, mindestens teilweise gewellter Katalysatorkörper (26, 27, 40, 44) entfernbar eingefügt ist, wobei die Wellenlänge der Wellung des Katalysatorkörpers (26, 27, 40, 44) kleiner als die Wellenlänge der benachbarten gewellten Platten (12, 25, 41, 42, 45) ist und die Oberfläche des Katalysatorkörpers (26, 27, 40, 44) größer als die Oberfläche einer benachbarten gewellten Platte (12, 25, 41, 42, 45) ist.

2. Reaktor nach Anspruch 1, *dadurch gekennzeichnet, daß* die Abschnitte (46) des Katalysatorkörpers (44), die ein Wellenteil (47) einer gewellten Platte (45) überqueren, in das Wellental hineingefügt sind.

3. Reaktor nach Anspruch 1, *dadurch gekennzeichnet, daß* der Katalysatorkörper (26, 27), den Wellentälern (25a) und Wellenkämmen (25b) der zugehörigen gewellten Platte (25) folgend, abwechselnd geriffelte (26a) und nichtgeriffelte Abschnitte (26b) aufweist, derart, daß jeweils die geriffelten Abschnitte (26a) sich in einem Wellental (25a) befinden und die nichtgeriffelten Abschnitte (26b) einen Wellenkamm (25b) umrunden.

4. Reaktor nach Anspruch 3, *dadurch gekennzeichnet, daß* die Amplitude (a) der einzelnen Riffelungen innerhalb der geriffelten Abschnitte (26a) zur Talsohle (25c) des zugehörigen Wellentales (25a) hin zunimmt.

5. Reaktor nach einem der Ansprüche 1 bis 4, *dadurch gekennzeichnet,* dass der Katalysatorkörper (26, 27, 40, 44) als Ganzer aus einem katalytisch wirksamen Material besteht.

6. Reaktor nach einem der Ansprüche 1 bis 4, *dadurch gekennzeichnet,* dass der Katalysatorkörper (26, 27, 40, 44) ein Körper ist, dessen Oberfläche katalytisch aktiviert ist.

7. Reaktor nach einem der Ansprüche 1 bis 4, *dadurch gekennzeichnet,* dass der Katalysatorkörper (26, 27, 40, 44) ein Körper ist, der mit einem katalytisch wirksamen Material beschichtet ist.

8. Reaktor nach einem der Ansprüche 1 bis 7, *dadurch gekennzeichnet*, dass der Katalysatorkörper (26, 27, 40, 44) aus Drahtgeflecht gebildet ist.

**Claims**

1. A reactor (1) for carrying out heterogeneous, catalysed chemical reactions, with at least one packing element (3, 4) incorporating a catalyst and consisting of corrugated plates (12, 25, 41, 42, 45) arranged parallel to the main flow axis (10) of the reactor (1), the corrugations of which are obliquely inclined to the main flow axis (10) and run in opposite directions on adjacent plates (12, 25, 41, 42, 45), *characterised* in that between adjacent plates (12, 25, 41, 42, 45) there is removably inserted at least one ribbon-shaped, at least partially corrugated catalyst body (26, 27, 40, 44), the wavelength of the corrugations of the catalyst body (26, 27, 40, 44) being smaller than the wavelength of the adjacent corrugated plates (12, 25, 41, 42, 45) and the surface of the catalyst body (26, 27, 40, 44) being larger than the surface of an adjacent corrugated plate (12, 25, 41, 42, 45).

2. The reactor according to claim 1, *characterised* in that the sections (46) of the catalyst body (44) which cross a corrugated part (47) of a corrugated plate (45) are inserted into the trough of the wave.

3. The reactor according to claim 1, *characterised* in that the catalyst body (26, 27), following the wave troughs (25a) and the wave crests (25b) of the associated corrugated plate (25), has alternately fluted (26a) and unfluted sections (26b), such that in each case the fluted sections (26a) lie in a wave trough (25a) and the unfluted sections (26b) are contoured around a wave crest (25b).

4. The reactor according to claim 3, *characterised* in that the amplitude (a) of the individual flutings within the fluted sections (26a) increases towards the valley floor (25c) of the associated wave trough (25a).

5. The reactor according to one of claims 1 to 4, *characterised* in that the catalyst body (26, 27, 40, 44) as a whole consists of a catalytically active material.

6. The reactor according to one of claims 1 to 4, *characterised* in that the catalyst body (26, 27, 40, 44) is a body whose surface is catalytically activated.

7. The reactor according to one of claims 1 to 4, *characterised* in that the catalyst body (26, 27, 40, 44) is a body coated with a catalytically active material.

8. The reactor according to one of claims 1 to 7, *characterised* in that the catalyst body (26, 27, 40, 44) is constituted from wire cloth.

**Revendications**

1. Réacteur (1) pour la conduite de réactions chimiques hétérogènes catalysées, comportant au moins un élément de garnissage (3, 4), pourvu d'un catalyseur, qui est constitué de plaques ondulées (12, 25, 41, 42, 45) disposées parallèlement à l'axe d'écoulement principal (10) du réacteur (1), dont l'ondulation est inclinée obliquement par rapport à l'axe d'écoulement principal (10) et est dirigée en sens contraire pour des plaques adjacentes (12, 25, 41, 42, 45), *caractérisé* en ce qu'au moins un corps de catalyseur (26, 27, 40, 44) partiellement ondulé, en forme de bande, est inséré de façon amovible entre des plaques adjacentes (12, 25, 41, 42, 45), la longueur de l'ondulation du corps de catalyseur (26, 27, 40, 44) étant inférieure à la longueur d'ondulation des plaques ondulées adjacentes (12, 25, 41, 42, 45) et la surface du corps de catalyseur (26, 27, 40, 44) étant plus grande que la surface d'une plaque ondulée (12, 25, 41, 42, 45) adjacente.

2. Réacteur suivant la revendication 1, *caractérisé* en ce que les portions (46) du corps de catalyseur (44) qui s'étendent en travers d'un creux d'ondulation (47) d'une plaque ondulée (45) sont insérées dans le creux d'ondulation.

3. Réacteur suivant la revendication 1, *caractérisé* en ce que le corps de catalyseur (26, 27) présente des portions alternativement cannelées (26a) et non cannelées (26b) suivant les creux d'ondulation (25a) et les crêtes d'ondulation (25b) de la plaque ondulée (25) correspondante, de telle sorte qu'à chaque fois, les portions cannelées (26a) se trouvent dans un creux d'ondulation (25a) et que les portions non cannelées (26b) contournent une crête d'ondulation (25b).

4. Réacteur suivant la revendication 3, *caractérisé* en ce que l'amplitude (a) des cannelures individuelles à l'intérieur des portions cannelées (26a) croît en direction du fond (25c) du creux d'ondulation (25a) correspondant.

5. Réacteur suivant l'une des revendications 1 à 4, *caractérisé* en ce que le corps de catalyseur (26, 27, 40, 44) est constitué en totalité en une matière douée d'activité catalytique.

6. Réacteur suivant l'une des revendications 1 à 4, *caractérisé* en ce que le corps de catalyseur (26, 27, 40, 44) est un corps dont la surface est rendue catalytiquement active.

7. Réacteur suivant l'une des revendications 1 à

7

4, *caractérisé* en ce que le corps de catalyseur (26, 27, 40, 44) est un corps qui est revêtu d'une matière catalytiquement active.

8. Réacteur suivant l'une des revendications 1 à 7, *caractérisé* en ce que le corps de catalyseur (26, 27, 40, 44) est réalisé en un treillis de fils métalliques.

EP 0 201 614 B1

FIG. 2

FIG. 1

FIG. 3

FIG. 4

FIG. 5

FIG. 6

FIG. 7

FIG. 8